# EUROPEAN PATENT SPECIFICATION

(11) **EP 1 645 134 B1**
(45) Date of publication and mention of the grant of the patent: **06.08.2008**
(21) Application number: 04773907.3
(22) Date of filing: 10.06.2004
(51) Int. Cl.: H04L 7/04, H04N 7/24, H04N 5/08, H04L 27/38

(54) **DIGITAL BROADCASTING TRANSMISSION/ RECEPTION CAPABLE OF IMPROVING A RECEIVING PERFORMANCE AND A SIGNAL PROCESSING METHOD THEREOF**
SENDEN/EMPFANGEN FÜR DIGITAL-BROADCAST MIT DER FÄHIGKEIT ZUR VERBESSERUNG EINER EMPFANGSLEISTUNGSFÄHIGKEIT UND SIGNALVERARBEITUNGSVERFAHREN DAFÜR
TRANSMISSION/RECEPTION DE TELEDIFFUSION NUMERIQUE CAPABLE D'AMELIORER LES PERFORMANCES DE RECEPTION ET PROCEDE DE TRAITEMENT DE SIGNAUX CORRESPONDANT

(30) Priority: 15.07.2003 US 486923 P; 09.09.2003 KR 2003063384
(43) Date of publication of application: 12.04.2006
(73) Proprietor: SAMSUNG ELECTRONICS CO., LTD., Suwon-si Gyeonggi-do 442-742 (KR)
(72) Inventor: KIM, Joon-Soo, Rowon-gu, Seoul 139-955 (KR); LEE, Dong-Hoon 244-803 Hwanggol-maeul, Suwon-si, Gyeonggi-do 443-744 (KR); KWAK, Jung-Won 205-1305, Sinsa Hyundai Apartment, Gangnam-gu, Seoul 135-789 (KR); PARK, Chan-Sub, Nam-gu, Incheon 402-760 (KR)
(74) Representative: Davies, Robert Ean
(86) International application number: PCT/KR2004/001384
(87) International publication number: WO 2005/006759

(56) References cited:
- WO-A1-99/23815
- KR-B1- 100 360 622
- US-A- 5 260 793
- US-A- 6 014 416
- US-A1- 2001 007 480
- US-B1- 6 335 766
- KIBUM KIM ET AL: "A SYMBOL TIMING RECOVERY USING THE SEGMENT SYNC DATA FOR THE DIGITAL HDTV GA VSB SYSTEM" IEEE TRANSACTIONS ON CONSUMER ELECTRONICS, vol. 42, no. 3, August 1996 (1996-08), pages 651-656, XP011083501
- GASCHLER D ET AL: "TRAINING-SEQUENCE ASSISTED QAM-CONCEPTS FOR DIGITAL TERRESTRIAL TV TRANSMISSION" IEEE TRANSACTIONS ON CONSUMER ELECTRONICS, vol. 43, no. 4, November 1997 (1997-11), pages 1180-1188, XP011008492

## Description

### Technical Field

The present invention relates generally to digital broadcasting transmission/reception systems. More particularly, the present invention pertains to a digital broadcasting transmission system including a segment sync signal capable of improving a receiving performance and a signal processing method thereof, and also a corresponding digital broadcasting reception system and a signal processing method thereof.

### Background Art

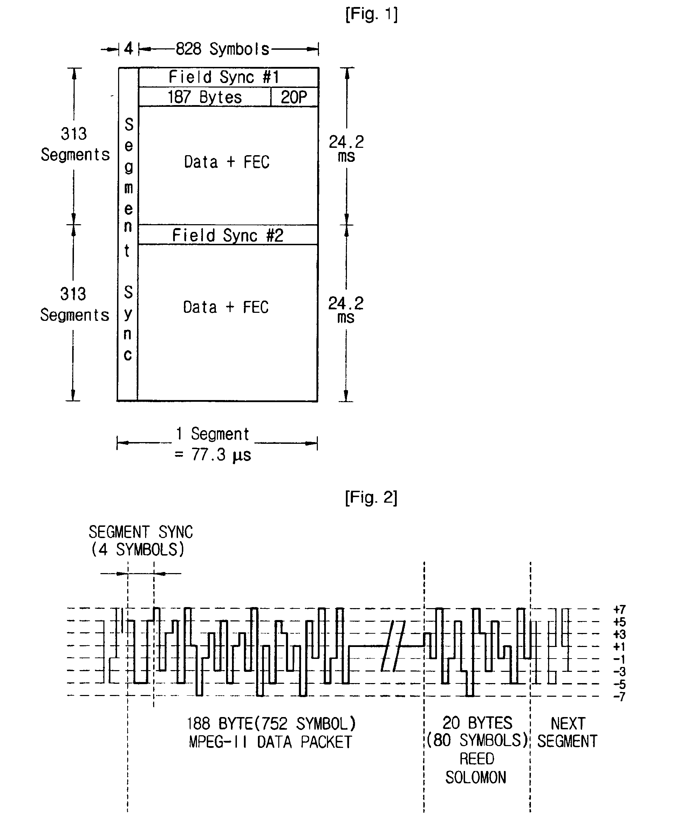

FIG. 1 is a transmission frame of a United States 8-VSB transmission system.

Referring now to FIG. 1, one frame consists of two fields and one field is made up of 313 segments. One segment consists of 832 symbols, in which four symbols are a segment sync and 828 symbols arc data and forward error correction (FEC). A first segment is a field sync.

The transmission frame includes the segment sync and the field sync. A reception system promotes a receiving performance by use of the segment sync and the field sync.

FIG. 2 is the 8-VSB signal of FIG. 1 mapped into certain levels. Referring now to FIG. 2, the four-symbol segment sync swings between two levels of 5, -5, -5 and 5. The 828-symbol data and FEC swings between eight levels of -7, -5, -3, -1, 1, 3, 5 and 7.

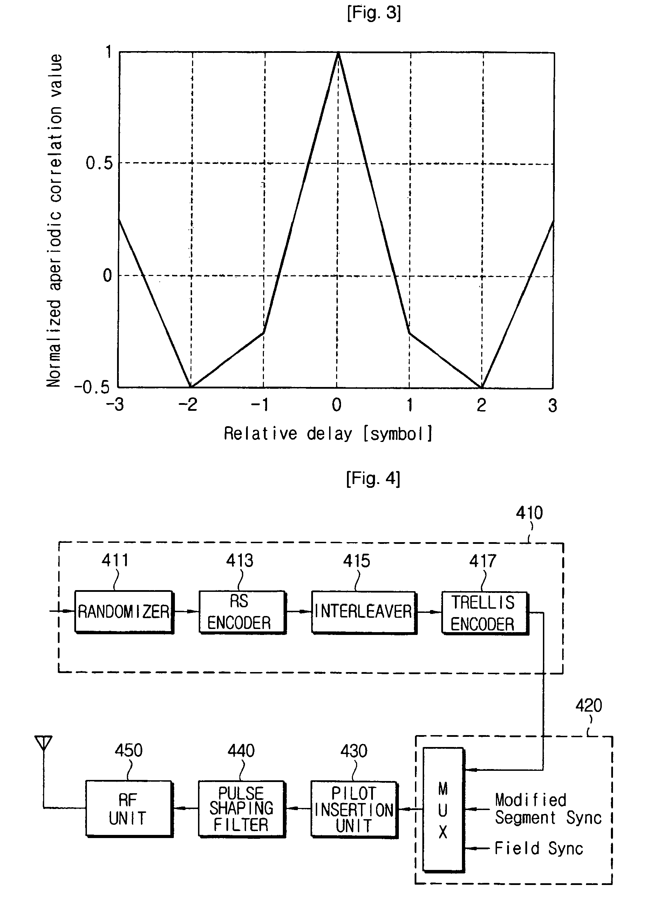

The conventional segment sync sequence takes a regular form of 5, -5, -5 and 5, and its normalized aperiodic correlation property is shown in FIG. 3. Referring to the correlation property of the conventional segment sync, a peak value of a sidelobe corresponds to 50 % of a main lobe.

Accordingly, it is difficult to spot the accurate position of the segment sync in poor channel conditions. Especially, it is infeasible to spot the starting point of the segment sync in a multipath fading channel.

The reception system equalizes by use of the field sync. However, it is hard to detect the field sync in an environment having abrupt channel changes since output values from a matched filter of the reception system constantly vary. This results from the field sync which is intermittently transmitted once per 313 segments as shown in FIG. 1. As a result, the field sync acquisition takes much more time in severe channel changes.

To improve the equalization performance, a channel delay profile should be estimated with accuracy, which requires a long training sequence such as the field sync. However, since the field sync of the US 8-VSB transmission frame is intermittently transmitted once per 313 segments, the channel delay profile is estimated inaccurately under the swift channel changes.
The document XP011083501 (Kibum Kim et al., "A Symbol Timing Recovery using the Segment Sync Data for the Digital HDTV GA VSB System; IEEE Transactions on Consumer Electronics, vol. 42, no. 3, August 1996, pages 651-656) describes a method and an apparatus for using the segment sync signal for symbol timing recovery.
The document US 2001/007480 A1 (Hong Sung Ryong et al; 12 July 2001) also discloses a method for synchronising using the segment signal. In this document, the segment sync signal gets modified by deploying a Hilbert filter, as a result of which a higher resistance against time-delayed copies of the segment sync can be realised.

### Disclosure of Invention

### Technical Problem

To overcome the above shortcomings of the related art, it is an aspect of the present invention to provide a digital broadcasting transmission system including modified segment syncs enabling improved receiving performance and a signal processing method thereof, and also a corresponding reception system and a signal processing method thereof.

### Technical Solution

The digital broadcasting transmission system includes a forward error correction (FEC) encoder for encoding an incoming signal according a certain FEC scheme, a sync signal insertion unit for inserting into the encoded signal a segment sync signal including modified segment syncs, a pilot insertion unit for inserting a pilot signal into the sync-inserted signal, a pulse shaping filter for pulse-shaping the pilot-inserted signal with a certain roll-off factor, and a radio frequency (RF) unit for transmitting the pulse-shaped signal through a transmission channel band.

The modified segment sync includes a predetermined number of sync signals, wherein the average of correlation values with respect to the predetermined number of the sync signals has an auto-corrclation property.

The sync signal insertion unit inserts the modified segment syncs in a repetitive pattern, and a conventional segment sync and the modified segment syncs in turns.

The predetermined number of the sync signals includes a first sync having a sequence of k, -k, -k, k, a second sync having a sequence of k, k, k, k, a third sync having a sequence of k, k, -k, -k, and a fourth sync having a sequence of k, -k, k, -k, wherein k' is a natural number indicating a level of the sync signal.

The signal processing method of the digital broadcasting transmission system includes encoding an incoming signal according to a forward error correction (FEC) scheme, inserting into the encoded signal a segment sync including modified segment syncs, inserting a pilot signal into the sync-inserted signal, pulse-shaping the pilot-inserted signal with a certain roll-off factor, and transmitting the pulse-shaped signal through a transmission channel band.

The digital broadcasting reception system corresponding to the transmission system includes a tuner for receiving and converting a signal of a tuned band into a signal of a baseband, a frequency recovery unit for compensating a frequency offset of a received signal, a timing recovery unit for compensating a timing offset of the received signal, a channel estimation unit for estimating a channel delay profile by use of modified segment syncs in the received signal, an equalizer for equalizing the received signal based on the estimated channel delay profile, and a forward error correction (FEC) decoder for correcting errors according to a certain FEC scheme.

Advantageously, the reception system includes a frequency offset estimation unit for estimating the frequency offset based on the channel delay profile estimated in the channel estimation unit, and a timing offset estimation unit for estimating the timing offset based on the channel delay profile estimated in the channel estimation unit.

The channel estimation unit includes a correlation calculation unit for calculating correlation values between the modified segment syncs and a reference signal, and an average calculation unit for calculating an average of the calculated correlation values to estimate the channel delay profile.

The signal processing method of the digital broadcasting reception system includes receiving a signal of a tuned band, compensating a frequency offset of a received signal, compensating a timing offset of the received signal, channel estimating a channel delay profile by use of modified segment syncs included in the received signal, equalizing the received signal based on the estimated channel delay profile, and correcting errors of the received signal according to a certain forward error correction (FEC) scheme.

Advantageously, the signal processing method includes estimating the frequency offset based on the channel delay profile which is estimated in the channel estimation step, and estimating the timing offset based on the channel delay profile which is estimated in the channel estimation step.

The channel estimation step includes calculating correlation values between the modified segment syncs and a reference signal, and estimating the channel delay profile by calculating an average of the estimated correlation values.

Accordingly, the transmission scheme utilizing the modified segment syncs promotes compatibility with the conventional reception system, minimizes the hardware complexity, and enhances the synchronization acquisition and the equalization performance.

### Advantageous Effects

The transmission scheme using the modified segment syncs according to an embodiment of the present invention, promotes the compatibility with the conventional reception system, minimizes the hardware complexity, and enhances the synchronization acquisition and the equalization performance.

One advantage of the present invention is to facilitate the segment sync acquisition. For the peak value of the sidelobe of '0' according to the average correlation property of the modified segment syncs, the aperiodic correlation property is improved. Consequently, more accurate position of the segment sync is detected, and specifically, the starting point of the segment sync is spotted with respect to each receiving path in the multipath fading channel.

Another advantage is to facilitate the field sync acquisition. The channel changes are estimated by a shorter unit than the existing 313 segments by using the modified segment syncs rather than the field sync of the conventional transmission frame, and verification of the channel changes with respect to the channel changes estimated by the field sync is facilitated. Hence, the time for acquiring the field sync is greatly reduced even in the severe channel changes.

Still another advantage is the carrier recovery robustness with respect to the channel changes. The channel delay profile is estimated by use of the modified segment syncs, to thus separate the multipath components. The frequency and phase offsets arc estimated from each path component of the separated multipath, thus improving the carrier recovery performance.

Yet another advantage is to improve the equalization performance by removing the multipath of the receiving signal based on the channel delay profile estimated by the modified segment syncs, as compared with the equalization using the field sync alone in the conventional system.

### Description of Drawings

These and other aspects and advantages of the invention will become apparent and more readily appreciated from the following description of the embodiments, taken in conjunction with the accompanying drawing figures of which:

FIG. 1 is a transmission frame complying with a US 8-VSB transmission system;

FIG. 2 is a format of a segment sync of the US 8-VSB transmission system;

FIG. 3 is a diagram illustrating a normalized aperiodic property of the conventional segment sync;

FIG. 4 is a schematic block diagram illustrating a digital broadcasting transmission system according to an embodiment of the present invention;

FIG. 5 is a structure of a transmission frame including modified segment syncs by the transmission system of FIG. 4;

FIGS. 6 to 9 arc views illustrating each modified segment sync to be inserted in the sync insertion unit of FIG. 4 according to an embodiment of the present invention;

FIG. 10 is a flowchart illustrating a signal processing method of the transmission system of FIG. 4 according to an embodiment of the present invention;

FIG. 11 is a schematic block diagram of a digital broadcasting reception system according to an embodiment of the present invention;

FIG. 12 is a detailed block diagram of the channel estimation unit 870 of FIG. 11;

FIGS. 13 to 17 are diagrams illustrating normalized aperiodic correlation properties with respect to the modified segment syncs according to an embodiment of the present invention; and

FIG. 18 is a flowchart illustrating a signal processing method of the reception system of FIG. 11.

### Best Mode

Reference will now be made in detail to the embodiments of the present invention, examples of which are illustrated in the accompanying drawing figures, wherein like reference numerals refer to the like elements throughout. The embodiments arc described below in order to explain the present invention by referring to the drawing figures.

FIG. 4 illustrates a schematic block diagram of a digital broadcasting transmission system according to an embodiment of the present invention.

The digital broadcasting transmission system includes a forward error correction (FEC) encoder 410, a sync insertion unit 420, a pilot insertion unit 430, a pulse shaping filter 440, and a radio frequency (RF) unit 450.

The FEC encoder 410 includes a randomizer 411, a Reed-Solomon (RS) encoder 413, an interleaver 415, and a trellis encoder 417. The randomizer 411 randomizes incoming MPEG2-TS data. The RS encoder 413 assigns a RS parity of certain bytes for the error correction of data. The interleaver 415 interleaves the RS parity-assigned data according to a certain pattern. The trellis encoder 417 encodes the interleaved data at a 2/3 rate.

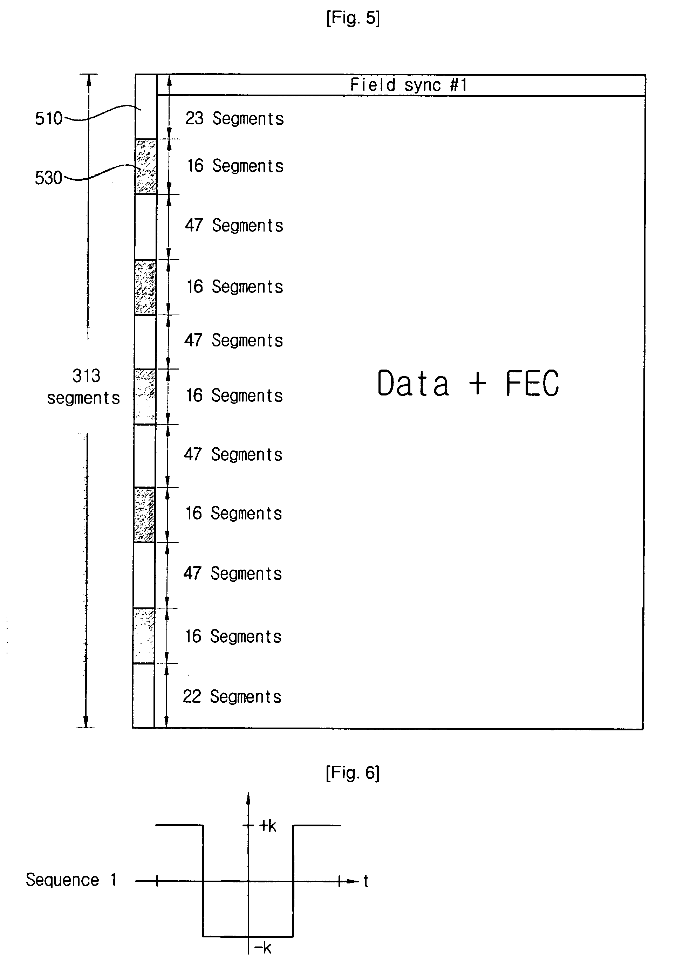

The sync insertion unit 420 inserts segment sync signals into the encoded signal and a field sync once per field. The segment sync signal includes modified segment syncs, which is described below with reference to FIGS. 5 and 6.

FIG. 5 illustrates an exemplary signal structure according to an embodiment of the present invention, in which a signal by a field is depicted. As shown in FIG. 5, the segment insertion region is classed into an existing segment sync region 10 and a modified segment sync region 530.

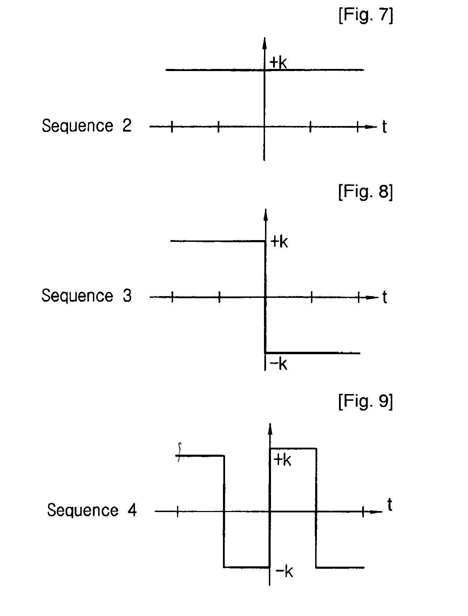

Referring now to FIGS. 6 to 9, the modified segment syncs include four types of sync signals. The first sync has a sequence of k, -k, -k, k (sequence 1) which is the same as the existing segment sync. The second sync has a sequence of k, k, k, k (sequence 2), the third sync has a sequence of k, k, -k, -k (sequence 3), and the fourth sync has a sequence of k, -k, k, -k (sequence 4).

Referring back to FIG. 5, the modified segment sync region 530 is configured with repetitive combination of the first through fourth syncs, and thus corresponds to segments of integral multiples of 4. A signal level of the modified segment sync may be adjusted in view of compatibility with a conventional reception system.

The pilot insertion unit 430 inserts one pilot signal into an edge of low frequency band in a frequency spectrum by applying a certain DC component to data signals of certain levels.

The pulse shaping filter 440 pulse-shapes the pilot-inserted signal by use of a filter having a certain roll-off factor.

The RF unit 450 up-converts the pulse-shaped signal into a signal of a RF channel band to be transmitted, and transmits the converted signal via an antenna.

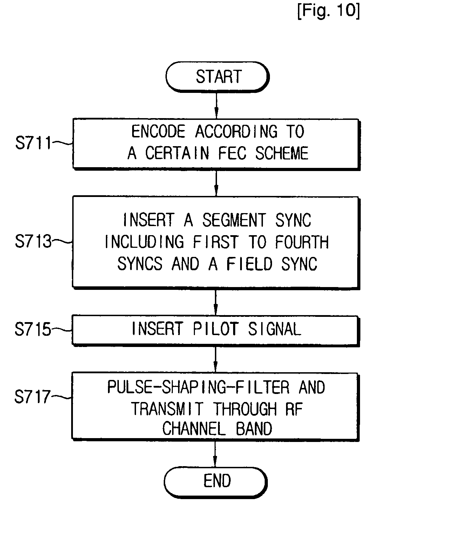

FIG. 10 is a flowchart illustrating a signal processing method of the transmission system of FIG. 4 according to an embodiment of the present invention, which becomes apparent below.

MPEG2-TS data is encoded in the FEC encoder 410 according to a certain FEC scheme at step S711.

The sync insertion unit 420 inserts one segment sync per segment into the encoded signal, and one field sync is inserted per field at step S713.

The existing segment sync is inserted into a predetermined number of segments, and the modified segment syncs of FIGS. 6 to 9 are inserted in turns into a predetermined number of segments. Preferably, the modified segment sync inserted segments arc advantageously integral multiplies of 4 so that the first to fourth segment syncs are repeatedly inserted.

The pilot insertion unit 430 inserts one pilot signal into an edge of low frequency band in the frequency spectrum by applying a certain DC component into the data and the sync at step S715.

The pilot-inserted signal is pulse-shaped with a certain roll-off factor in the pulse shaping filter 440 and transmitted through the RF channel band at step S717.

In the light of the foregoing, the modified segment syncs are inserted to the segment syncs of the existing transmission frame. As a result, the synchronization acquisition and the equalization performance are enhanced as well as the compatibility with the existing reception system.

A digital broadcasting reception system is described below, of which the equalization performance and the synchronization acquisition are enhanced by the transmission system including the modified segment syncs.

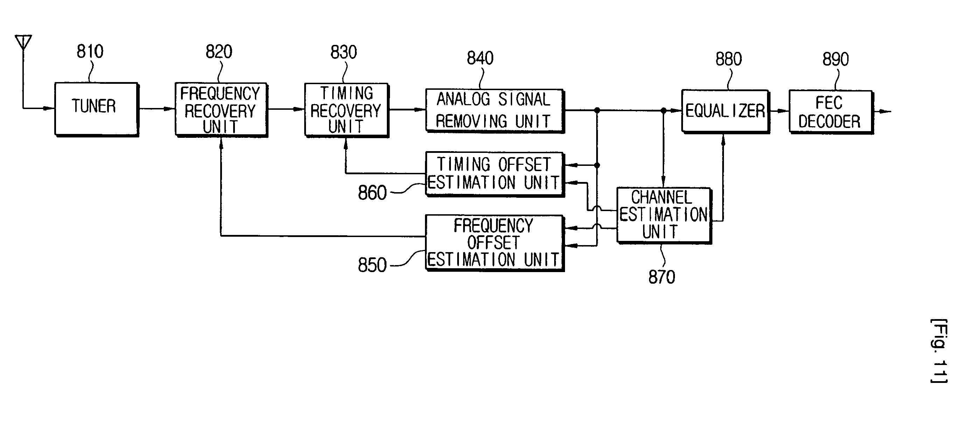

FIG. 11 is a schematic block diagram of the digital broadcasting reception system according to an embodiment of the present invention;

The reception system includes a tuner 810, a frequency recovery unit 820, a timing recovery unit 830, an analog signal removing unit 840, a frequency offset estimation unit 850, a timing offset estimation unit 860, a channel estimation unit 870, an equalizer 880, and a FEC decoder 890.

The tuner 810 converts a received signal of a tuned band into a signal of a baseband.

The frequency recovery unit 820 compensates a frequency offset estimated in the frequency offset estimation unit 850.

The timing recovery unit 830 compensates a timing offset estimated in the timing offset estimation unit 860.

The analog signal removing unit 840 discards an analog signal contained in the receiving signal of the tuned band.

The frequency offset estimation unit 850 estimates a frequency offset initially using a pilot-tone of the receiving signal. When a channel delay profile is estimated in the channel estimation unit 870, the frequency offset estimation unit 850 estimates the frequency offset based on the estimated channel delay profile.

The timing offset estimation unit 860 estimates a timing offset initially using the sync and data signals. When a channel delay profile is estimated in the channel estimation unit 870, the timing offset estimation unit 860 estimates the timing offset based on the estimated channel delay profile.

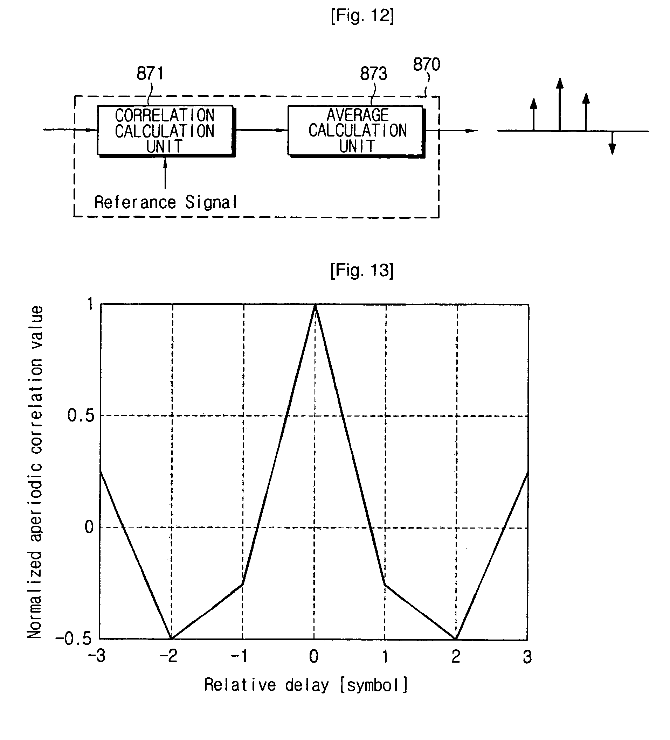

The channel estimation unit 870 estimates the delay profile of the receiving channel using the segment syncs included in the receiving signal, which will be described below in greater detail with reference to FIGS. 12 to 17.

The equalizer 880 removes multipath of the receiving channel based on the estimated channel delay profile of the channel estimation unit 870.

The FEC decoder 890 detects errors of data according to a certain FEC scheme, and corrects the detected errors.

Exemplary steps for the channel delay profile estimation arc described below, which use the modified segment syncs.

FIG. 12 is a detailed block diagram of the channel estimation unit 870 of FIG. 11. FIGS. 13 to 17 are diagrams illustrating normalized aperiodic correlation properties, respectively, with respect to the modified segment syncs.

Referring now to FIG. 12, the channel estimation unit 870 includes a correlation estimation unit 871 and an average calculation unit 873.

The correlation calculation unit 871 calculates a correlation value between the modified segment sync of the received signal and a reference signal. The reference signal corresponds to the first to fourth syncs which are the modified segment syncs inserted at the transmission side. That is, the correlation value is calculated only for the modified segment syncs excluding the existing segment sync.

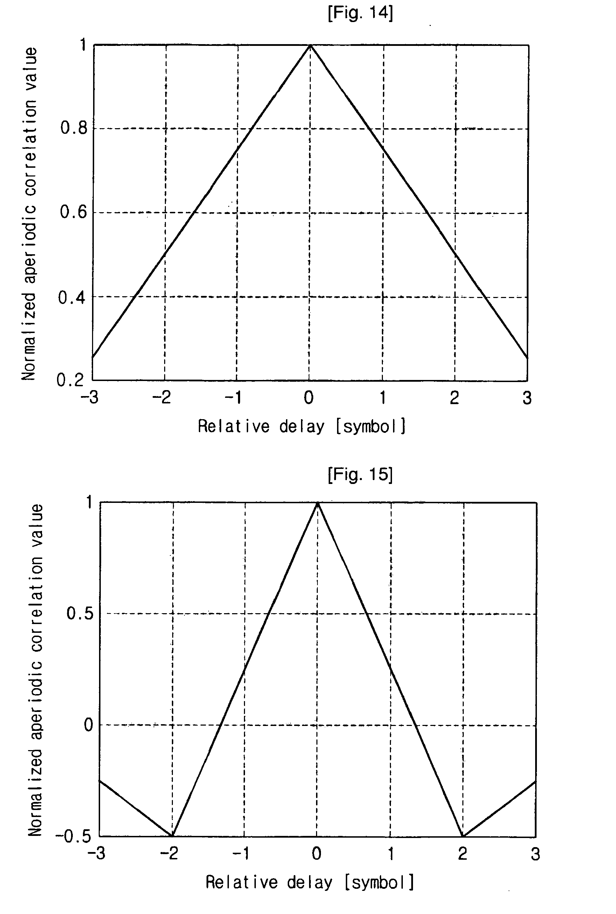

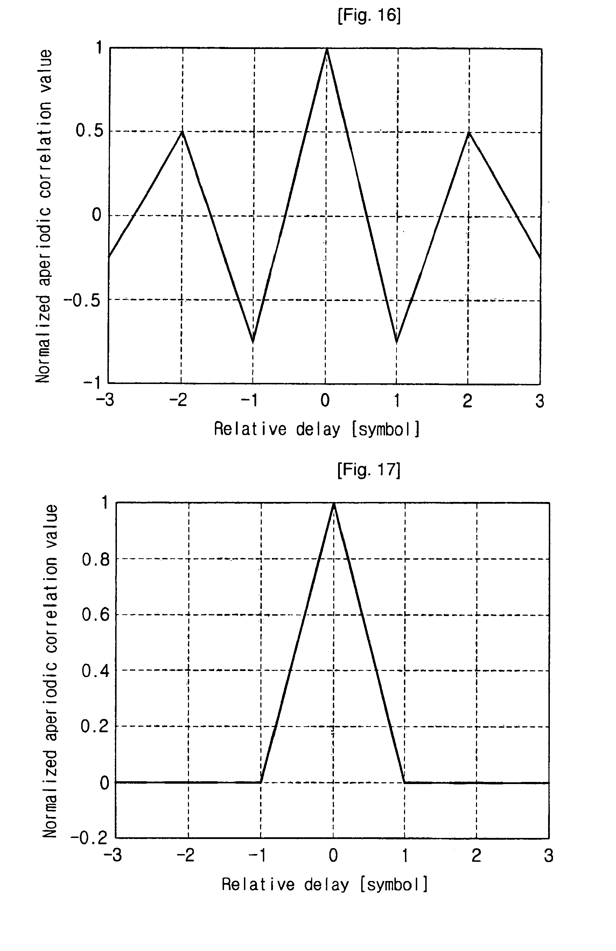

FIGS. 13 to 16 illustrate normalized aperiodic correlation properties between the first to fourth syncs and the reference signal. FIG. 13 is the correlation property with respect to the first sync. FIG. 14 is the correlation property with respect to the second sync. FIG. 15 is the correlation property with respect to the third sync. FIG. 16 is the correlation property with respect to the fourth sync.

That is, the correlation values of the first to fourth syncs, which arc output from the correlation calculation unit 871, arc shown in FIGS. 13 to 16.

The average calculation unit 873 accumulates and averages each correlation value of the modified segment syncs. The obtained average is the aperiodic auto-correlation as shown in FIG. 17. The obtained average has the improved aperiodic correlation property, of which the sidelobe peak value is '0'. More accurate results may be acquired by averaging correlation values of the segments which are integral multiples of 4 and have the segment syncs.

According to the average correlation value calculation, a channel delay profile corresponding to the multipath is estimated with respect to the receiving channel including the multipath.

The estimated channel delay profile is furnished to the equalizer 880, and the equalizer 880 equalizes based on the channel delay profile. Thus, the equalization performance is enhanced by more frequently estimating and equalizing the channel delay profile as compared with the related art.

The estimated channel delay profile is also furnished to the frequency offset estimation unit 850 and the timing offset estimation unit 860 for estimating a frequency offset and a timing offset robustly to the channel conditions.

The frequency offset estimation unit 850 estimates the frequency offset robustly with respect to the channel conditions based on the estimated channel delay profile. Specifically, multipath components arc separated based on the estimated channel delay profile, and the frequency offset is estimated from each of the separated components. As a result, the frequency offset is estimated robustly with respect to the channel conditions.

The timing offset estimation unit 860 estimates the timing offset robustly with respect to the channel conditions by use of the estimated channel delay profile. As shown in FIG. 17, the peak value of the sidelobe is '0' in the correlation property of the obtained average of the average calculation unit 873. Accordingly, the starting point of the segment sync is accurately spotted with respect to each receiving path in the multipath fading channel, to thus facilitate the segment sync acquisition. The field sync acquisition is also facilitated by improving the time for acquiring the field sync in severe channel changes owing to the channel delay profile estimated by the modified segment syncs. As a result, the timing offset is accurately estimated by the sync acquisition robustly with respect to the channel conditions.

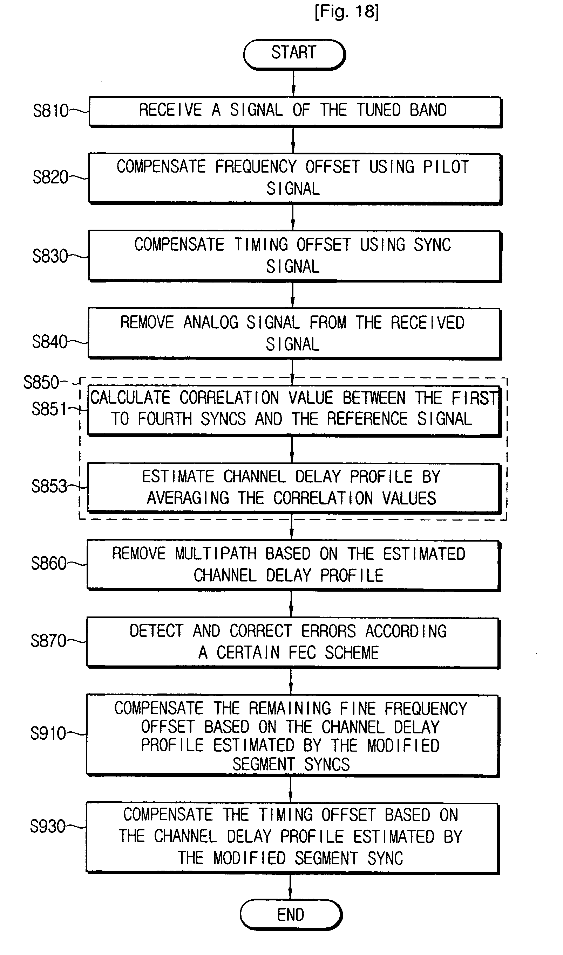

FIG. 18 is a flowchart illustrating a signal processing method of the reception system according to an embodiment of the present invention, which is described in detail below.

The tuner 810 receives the signal of the tuned band and converts the signal into a signal of the baseband at step S810.

The frequency recovery unit 820 compensates the frequency offset which is estimated in the frequency offset estimation unit 850 by use of the pilot signal at step S820.

The timing recovery unit 830 compensates the timing offset which is estimated in the timing offset estimation unit 860 by use of the sync and the data signal at step S830.

The analog signal removing unit 840 discards the analog signal by generating a null signal at the position of the analog signal included in the received signal at step S840.

The channel estimation unit 870 estimates the channel delay profile using the modified segment syncs at step S850.

In detail, the correlation calculation unit 871 calculates the correlation value between the first to fourth syncs and the reference signal at step S851. The average calculation unit 873 calculates the average value by accumulating the obtained correlation values of the first to fourth syncs, and thus estimates the channel delay profile corresponding to the multipath depending on the channel conditions at step S853.

The equalizer 880 removes the multipath of the receiving signal based on the estimated channel delay profile of the channel estimation unit 870 at step S860.

The FEC decoder 890 detects and corrects errors from the equalized receiving signal according to a certain FEC scheme at step S870.

The frequency offset estimation unit 850 estimates fine frequency offset based on the estimated channel delay profile of the channel estimation unit 870, and the frequency recovery unit 820 compensates the estimated fine frequency offset at step S910.

The timing offset estimation unit 860 estimates the timing offset based on the estimated channel delay profile of the channel estimation unit 870, and the timing recovery unit 830 compensates the estimated timing offset at step S930.

As a result, the synchronization acquisition and the equalization performance arc enhanced in the reception system by using the modified segment syncs.

The compatibility with the existing system is promoted by partially modifying the segment syncs of the conventional transmission frame. Also, the complexity of hardware implemented is not so high since the four-symbol segment syncs are utilized.

### Industrial Applicability

The present invention is applied generally to digital broadcasting transmission/reception systems. More particularly, the present invention is applied to a digital broadcasting transmission system including a segment sync signal capable of improving a receiving performance and a signal processing method thereof, and also a corresponding digital broadcasting reception system and a signal processing method thereof.

## Claims

1. A digital broadcasting transmission system comprising:
a forward error correction (FEC) encoder encoding an input signal according to a FEC scheme; a sync signal insertion unit inserting into the encoded signal a segment sync signal including segment syncs;
a pilot insertion unit (430) inserting a pilot signal into the sync-inserted signal; a pulse shaping filter (440) pulse-shaping the pilot-inserted signal with a roll-off factor; and
a radio frequency (RF) unit (450) transmitting the pulse-shaped signal through a transmission channel band, **characterised in that** the segment sync includes a predetermined number of sync signals, wherein the average of correlation values with respect to the predetermined number of the sync signals has an auto-correlation property.

2. The system of claim 1, wherein the sync signal insertion unit inserts the segment syncs in a repetitive pattern.

3. The system of claim 2, wherein the sync signal insertion unit inserts a conventional segment sync and the segment syncs in turns.

4. The system of claim 1, wherein the predetermined number of the sync signals comprises:
a first sync having a sequence of k,-k,-k, k;
a second sync having a sequence of k, k, k, k;
a third sync having a sequence of k, k, -k, -k; and
a fourth synch having a sequence of k, -k, k, -k,
wherein k is a natural number indicating a level of the sync signal.

5. A signal processing method of a digital broadcasting transmission system, comprising:
encoding (S711) an input signal according to a forward error correction (FEC) scheme;
inserting (S713) into the encoded signal a segment sync including segment syncs;
inserting (S715) a pilot signal into the sync-inserted signal;
pulse-shaping (S717) the pilot-inserted signal with a roll-off factor; and
transmitting the pulse-shaped signal through a transmission channel band, **characterised in that** the segment sync comprises a predetermined number of sync signals, wherein the average of correlation values with respect to the predetermined number of sync signals has an auto-correlation property.

6. The method of claim 5, wherein the sync signal insertion step inserts the segment syncs in a repetitive pattern.

7. The method of claim 6, wherein the sync signal insertion step inserts a conventional segment sync and the segments in turns.

8. The method of claim 6, wherein the predetermined number of the sync signals comprises:
a first sync having a sequence of k, -k, -k, k;
a second sync having a sequence of k, k, k, k;
a third sync having a sequence of k, k, -k, -k; and
a fourth sync having a sequence of k, -k, k,-k,
wherein k is a natural number indicating a level of the sync signal.

9. A digital broadcasting reception system comprising:
a tuner (810) receiving and converting a signal of a tuned band into a signal of a baseband;
a frequency recovery unit (820) compensating a frequency offset of the received signal;
a timing recovery unit (830) compensating a timing offset of the received signal;
a channel estimation unit (870) estimating a channel delay profile by use of segment syncs in the received signal;
an equalizer (880) equalizing the received signal based on the estimated channel delay profile; and
a forward error correction (FEC) decoder (890) correcting errors according to a FEC scheme, **characterised in that** the segment syncs comprise a predetermined number of sync signals, wherein the average of correlation values with respect to the predetermined number of sync signals has an auto-correlation property

10. The system of claim 9, further comprising:
a frequency offset estimation unit (850) estimating the frequency offset based on the channel delay profile estimated in the channel estimation unit (870); and
a timing offset estimation unit (860) estimating the timing offset based in the channel delay profile estimated in the channel estimation unit.

11. The system of claim 9, wherein the channel estimation unit comprises:
a correlation calculation unit calculating correlation values between the segment syncs and a reference signal; and
an average calculation unit calculating an average of the calculated correlation values to estimate the channel delay profile.

12. The system of claim 9, wherein the segment syncs comprise a predetermined number of sync signals, an the reference signal is the same signal as the segment syncs and comprises the predetermined number of the sync signals.

13. The system of claim 12, wherein the predetermined number of the sync signal comprises:
a first sync having a sequence of k, -k, -k, k;
a second sync having a sequence of k, k, k, k;
a third sync having a sequence of k, k, -k, -k; and
a fourth sync having a sequence of k, -k, k, -k,
wherein k is a natural number indicating a level of the sync signal.

14. The system of claim 11, wherein the average calculated in the average calculation unit has an auto-correlation property.

15. A signal processing method of a digital broadcasting reception system, comprising:
receiving (S810) a signal of a tuned band;
compensating (S820) a frequency offset of the received signal;
compensating (S830) a timing offset of the received signal;
channel estimating (S850) a channel delay profile by use of segment syncs included in the received signal;
equalizing (s860) the received signal based on the estimated channel delay profile; and correcting (s870) errors of the received signal according to a forward error correction (FEC) scheme, **characterised in that** the segment syncs comprise a predetermined number of sync signals, wherein the average of correlation values with respect to the predetermined number of sync signals has an auto-correlation property.

16. The method of claim 15, further comprising:
estimating the frequency offset based on the channel delay profile which is estimated in the channel estimation step; and
estimating the timing offset based on the channel delay profile which is estimated in the channel estimation step.

17. The method of claim 15, wherein the channel estimation step comprises:
calculating (S851) correlation values between the segment syncs and a reference signal; and
estimating (S853) the channel delay profile by calculating an average of the estimated correlation values.

18. The method of claim 15, wherein the segment syncs comprise a predetermined number of sync signals, and the reference signal is the same signal as the segment sync and comprises the predetermined number of the sync signals.

19. The method of claim 18, wherein the predetermined number of the sync signals comprise:
a first sync having a sequence of k, -k, -k, k;
a second sync having a sequence of k, k, k, k;
a third sync having a sequence of k, k, -k, -k; and
a fourth sync having a sequence of k, -k, k, -k,
wherein k is a natural number indicating a level of the sync signal.

20. The method of claim 17, wherein the calculated average has a auto-correlation property.

## Patentansprüche

1. Digitales Rundfunksendesystem, umfassend:
einen Vorwärtsfehlerkorrektur-Codierer, der ein Eingangssignal gemäß einem Vorwärtsfehlerkorrektur-Schema codiert;
eine Synchronisationssignal-Einfügeeinheit, die ein Segmentsynchronisationssignal, das Segmentsynchronisationen enthält, in das codierte Signal einfügt;
eine Pilot-Einfügeeinheit (430), die ein Pilotsignal in das Signal einfügt, in das Synchronisationen eingefügt wurden;
ein Impulsformungsfilter (440), das an dem Signal, in das ein Pilot eingefügt wurde, Pulsformung mit einem Roll-off-Faktor durchführt; und
eine Funkfrequenzeinheit (450), die das Signal, an dem Pulsformung durchgeführt wurde, über ein Sendekanalband sendet, **dadurch gekennzeichnet, dass** die Segmentsynchronisation eine vorgegebene Anzahl von Synchronisationssignalen enthält, wobei der Durchschnitt von Korrelationswerten in Bezug auf die vorgegebene Anzahl der Synchronisationssignale eine Autokorrelationseigenschaft aufweist.

2. System nach Anspruch 1, wobei die Synchronisationssignal-Einfügeeinheit die Segmentsynchronisationen in einem Wiederholungsmuster einfügt.

3. System nach Anspruch 2, wobei die Synchronisationssignal-Einfügeeinheit eine herkömmliche Segmentsynchronisation und die Segmentsynchronisationen im Wechsel einfügt.

4. System nach Anspruch 1, wobei die vorgegebene Anzahl der Synchronisationssignale umfasst:
eine erste Synchronisation mit einer Sequenz von k, -k, -k, k;
eine zweite Synchronisation mit einer Sequenz von k, k, k, k;
eine dritte Synchronisation mit einer Sequenz von k, k, -k, -k; und
eine vierte Synchronisation mit einer Sequenz von k, -k, k, -k;
wobei k eine natürliche Zahl ist, die einen Pegel des Synchronisationssignals anzeigt.

5. Signalverarbeitungsverfahren eines digitalen Rundfunksendesystems, umfassend:
Codieren (S711) eines Eingangssignals gemäß einem Vorwärtsfehlerkorrektur-Schema;
Einfügen (S713) einer Segmentsynchronisation, die Segmentsynchronisationen enthält, in das codierte Signal;
Einfügen (S715) eines Pilotsignals in das Signal, in das Synchronisationen eingefügt wurden;
Durchführen von Pulsformung (S717) des Signals, in das ein Pilot eingefügt wurde, mit einem Roll-off-Faktor; und
Senden des Signals, an dem Pulsformung durchgeführt wurde, über ein Sendekanalband, **dadurch gekennzeichnet, dass** die Segmentsynchronisation eine vorgegebene Anzahl von Synchronisationssignalen enthält, wobei der Durchschnitt von Korrelationswerten in Bezug auf die vorgegebene Anzahl von Synchronisationssignalen eine Autokorrelationseigenschaft aufweist.

6. Verfahren nach Anspruch 5, wobei der Synchronisationssignal-Einfügeschritt die Segmentsynchronisationen in einem Wiederholungsmuster einfügt.

7. Verfahren nach Anspruch 6, wobei der Synchronisationssignal-Einfügeschritt eine herkömmliche Segmentsynchronisation und die Segmente im Wechsel einfügt.

8. Verfahren nach Anspruch 6, wobei die vorgegebene Anzahl der Synchronisationssignale umfasst:
eine erste Synchronisation mit einer Sequenz von k, -k, -k, k;
eine zweite Synchronisation mit einer Sequenz von k, k, k, k;
eine dritte Synchronisation mit einer Sequenz von k, k, -k, -k; und
eine vierte Synchronisation mit einer Sequenz von k, -k, k, -k;
wobei k eine natürliche Zahl ist, die einen Pegel des Synchronisationssignals anzeigt.

9. Digitales Rundfunkempfangssystem, umfassend:
einen Tuner (810), der ein Signal eines abgestimmten Bandes empfängt und in ein Signal eines Basisbandes umwandelt;
eine Frequenzwiederherstellungseinheit (820), die einen Frequenzversatz des empfangenen Signals kompensiert;
eine Taktwiederherstellungseinheit (830), die einen Taktversatz des empfangenen Signals kompensiert;
eine Kanalschätzeinheit (870), die ein Kanalverzögerungsprofil schätzt, wobei Segmentsynchronisationen in dem empfangenen Signal verwendet werden;
einen Entzerrer (Equalizer) (880), der das empfangene Signal auf Basis des geschätzten Kanalverzögerungsprofils entzerrt; und
einen Vorwärtsfehlerkorrektur-Decodierer (890), der Fehler gemäß einem Vorwärtsfehlerkorrektur-Schema korrigiert, **dadurch gekennzeichnet, dass** die Segmentsynchronisationen eine vorgegebene Anzahl von Synchronisationssignalen enthalten, wobei der Durchschnitt von Korrelationswerten in Bezug auf die vorgegebene Anzahl von Synchronisationssignalen eine Autokorrelationseigenschaft aufweist.

10. System nach Anspruch 9, des Weiteren umfassend:
eine Frequenzversatz-Schätzeinheit (850), die den Frequenzversatz auf Basis des Kanalverzögerungsprofils schätzt, das in der Kanalschätzeinheit (870) geschätzt wurde; und
eine Taktversatz-Schätzeinheit (860), die den Taktversatz auf Basis des Kanalverzögerungsprofils schätzt, das in der Kanalschätzeinheit geschätzt wurde.

11. System nach Anspruch 9, wobei die Kanalschätzeinheit umfasst:
eine Korrelationsberechnungseinheit, die Korrelationswerte zwischen den Segmentsynchronisationen und einem Bezugssignal berechnet; und
eine Durchschnittsberechnungseinheit, die einen Durchschnitt der berechneten Korrelationswerte berechnet, um das Kanalverzögerungsprofil zu schätzen.

12. System nach Anspruch 9, wobei die Segmentsynchronisationen eine vorgegebene Anzahl von Synchronisationssignalen umfassen und das Bezugssignal das gleiche Signal wie die Segmentsynchronisationen ist und die vorgegebene Anzahl der Synchronisationssignale umfasst.

13. System nach Anspruch 12, wobei die vorgegebene Anzahl des Synchronisationssignals umfasst:
eine erste Synchronisation mit einer Sequenz von k, -k, -k, k;
eine zweite Synchronisation mit einer Sequenz von k, k, k, k;
eine dritte Synchronisation mit einer Sequenz von k, k, -k, -k; und
eine vierte Synchronisation mit einer Sequenz von k, -k, k, -k;
wobei k eine natürliche Zahl ist, die einen Pegel des Synchronisationssignals anzeigt.

14. System nach Anspruch 11, wobei der Durchschnitt, der in der Durchschnittsberechnungseinheit berechnet wird, eine Autokorrelationseigenschaft aufweist.

15. Signalverarbeitungsverfahren eines digitalen Rundfunkempfangssystems, umfassend:
Empfangen (S810) eines Signals eines abgestimmten Bandes;
Kompensieren (S820) eines Frequenzversatzes des empfangenen Signals;
Kompensieren (S830) eines Taktversatzes des empfangenen Signals;
Durchführen von Kanalschätzung (S850) eines Kanalverzögerungsprofils unter Verwendung von Segmentsynchronisationen, die in dem empfangenen Signal enthalten sind;
Entzerren (s860) des empfangenen Signals auf Basis des geschätzten Kanalverzögerungsprofils; und
Korrigieren (s870) von Fehlern des empfangenen Signals gemäß einem Vorwärtsfehlerkorrektur-Schema, **dadurch gekennzeichnet, dass** die Segmentsynchronisationen eine vorgegebene Anzahl von Synchronisationssignalen enthalten, wobei der Durchschnitt von Korrelationswerten in Bezug auf die vorgegebene Anzahl von Synchronisationssignalen eine Autokorrelationseigenschaft aufweist.

16. Verfahren nach Anspruch 15, des Weiteren umfassend:
Schätzen des Frequenzversatzes auf Basis des Kanalverzögerungsprofils, das in dem Kanalschätzschritt geschätzt wird; und
Schätzen des Taktversatzes auf Basis des Kanalverzögerungsprofils, das in dem Kanalschätzschritt geschätzt wird.

17. Verfahren nach Anspruch 15, wobei der Kanalschätzschritt umfasst:
Berechnen (S851) von Korrelationswerten zwischen den Segmentsynchronisationen und einem Bezugssignal; und
Schätzen (S853) des Kanalverzögerungsprofils durch Berechnen eines Durchschnitts der geschätzten Korrelationswerte.

18. Verfahren nach Anspruch 15, wobei die Segmentsynchronisationen eine vorgegebene Anzahl von Synchronisationssignalen umfassen und das Bezugssignal das gleiche Signal wie die Segmentsynchronisation ist und die vorgegebene Anzahl der Synchronisationssignale umfasst.

19. Verfahren nach Anspruch 18, wobei die vorgegebene Anzahl der Synchronisationssignale umfasst:
eine erste Synchronisation mit einer Sequenz von k, -k, -k, k;
eine zweite Synchronisation mit einer Sequenz von k, k, k, k;
eine dritte Synchronisation mit einer Sequenz von k, k, -k, -k; und
eine vierte Synchronisation mit einer Sequenz von k, -k, k, -k;
wobei k eine natürliche Zahl ist, die einen Pegel des Synchronisationssignals anzeigt.

20. Verfahren nach Anspruch 17, wobei der berechnete Durchschnitt eine Autokorrelationseigenschaft aufweist.

## Revendications

1. Système de transmission de diffusion numérique, comprenant :
un codeur de correction d'erreurs sans voie de retour (FEC) codant pour un signal d'entrée selon un schéma FEC ; une unité d'insertion de signal de synchronisation insérant, dans le signal codé, un signal de synchronisation de segments, notamment des synchronisations de segments ;
une unité d'insertion pilote (430) insérant un signal pilote dans le signal à signal de synchronisation inséré ;
un filtre de mise en forme d'impulsions (440) mettant en forme d'impulsions le signal à signal pilote inséré avec un facteur d'affaiblissement ;
et
une unité (450) à radiofréquence (RF) transmettant le signal mis en forme d'impulsions à travers une bande de canal de transmission, **caractérisé en ce que** la synchronisation de segments comprend un nombre prédéterminé de signaux de synchronisation, dans lequel la moyenne de valeurs de corrélation, par rapport au nombre prédéterminé des signaux de synchronisation, ont une propriété d'auto-corrélation.

2. Système selon la revendication 1, dans lequel l'unité d'insertion de signal de synchronisation insère les synchronisations de segments selon un motif récurrent.

3. Système selon la revendication 2, dans lequel l'unité d'insertion de signal de synchronisation insère tour à tour une synchronisation de segments classique et les synchronisations de segments.

4. Système selon la revendication 1, dans lequel le nombre prédéterminé de signaux de synchronisation comprend :
une première synchronisation ayant une séquence k, -k, -k, k ;
une deuxième synchronisation ayant une séquence k, k, k, k ;
une troisième synchronisation ayant une séquence k, k, -k, -k ; et
une quatrième séquence ayant une séquence k, -k, k, -k,
k étant un nombre entier naturel indiquant un niveau du signal de synchronisation.

5. Procédé de traitement de signal d'un système de transmission de diffusion numérique, comprenant :
le codage (S711) d'un signal d'entrée selon un schéma de correction d'erreurs sans voie de retour (FEC) ;
l'insertion (S713) dans le signal codé d'une synchronisation de segments, notamment des synchronisations de segments ;
l'insertion (S715) d'un signal pilote dans le signal à signal de synchronisation inséré ;
la mise en forme d'impulsions (S717) du signal à signal pilote inséré avec un facteur d'affaiblissement ; et
la transmission du signal à mise en forme d'impulsions à travers un bande de canal de transmission, **caractérisé en ce que** la synchronisation de segments comprend un nombre prédéterminé de signaux de synchronisation, la moyenne de valeurs de corrélation, par rapport au nombre prédéterminé de signaux de synchronisation, ayant une propriété d'autocorrélation.

6. Procédé selon la revendication 5, dans lequel l'étape d'insertion de signal de synchronisation insère les synchronisations de segments selon un motif récurrent.

7. Procédé selon la revendication 6, dans lequel l'étape d'insertion de signal de synchronisation insère tour à tour une synchronisation de segments classique et les segments.

8. Procédé selon la revendication 6, dans lequel le nombre prédéterminé de signaux de synchronisation comprend une première synchronisation ayant une séquence k, -k, -k, k ;
une deuxième synchronisation ayant une séquence k, k, k, k ;
une troisième synchronisation ayant une séquence k, k, -k, -k ; et
une quatrième synchronisation ayant une séquence k, -k, k, -k ;
k étant un nombre entier naturel indiquant un niveau du signal de synchronisation.

9. Système de réception de diffusion numérique comprenant :
un syntoniseur (810) recevant et convertissant un signal d'une bande syntonisée en un signal d'une bande de base ;
une unité de récupération de fréquence (820) compensant un décalage de fréquence du signal reçu ;
une unité de récupération du rythme (830) compensant un décalage de rythme du signal reçu ;
une unité d'estimation de canal (870) estimant un profil de retard de canal à l'aide de synchronisations de segments dans le signal reçu ;
un égaliseur (880) égalisant le signal reçu par rapport au profil de retard de canal estimé ;
et
un décodeur (890) à correction d'erreurs sans voie de retour (FEC) corrigeant des erreurs selon un schéma FEC, **caractérisé en ce que** les synchronisations de segments comprennent un nombre prédéterminé de signaux de synchronisation, la moyenne de valeurs de corrélation par rapport au nombre prédéterminé de signaux de synchronisation ayant une propriété d'autocorrélation.

10. Système selon la revendication 9, comprenant en outre :
une unité d'estimation de décalage de fréquence (850) estimant le décalage de fréquence par rapport au profil de retard de canal estimé dans l'unité d'estimation de canal (870) ; et
une unité d'estimation de décalage de rythme (860) estimant le décalage de rythme par rapport au profil de retard de canal estimé dans l'unité d'estimation de canal.

11. Système selon la revendication 9, dans lequel l'unité d'estimation de canal comprend :
une unité de calcul de corrélation calculant des valeurs de corrélation entre les synchronisations de segments et un signal de référence ; et
une unité de calcul de moyenne calculant une moyenne des valeurs de corrélation calculées pour estimer le profil de retard de canal.

12. Système selon la revendication 9, dans lequel les synchronisations de segments comprennent un nombre prédéterminé de signaux de synchronisation et le signal de référence est le même signal que celui des synchronisations de segments et comprend le nombre prédéterminé de signaux de synchronisation.

13. Système selon la revendication 12, dans lequel le nombre prédéterminé du signal de synchronisation comprend :
une première synchronisation ayant une séquence de type k, -k, -k, k ;
une deuxième synchronisation ayant une séquence k, k, k, k ;
une troisième synchronisation ayant une séquence k, k, -k, -k ; et
une quatrième synchronisation ayant une séquence k, -k, k, -k ;
k étant un nombre entier naturel indiquant un niveau du signal de synchronisation.

14. Système selon la revendication 11, dans lequel la moyenne calculée dans l'unité de calcul de moyenne présente une propriété d'autocorrélation.

15. Procédé de traitement de signal d'un système de réception de diffusion numérique, comprenant la réception (S810) d'un signal d'une bande syntonisée ;
la compensation (S820) d'un décalage de fréquence du signal reçu ;
la compensation (S830) d'un décalage de rythme du signal reçu ;
l'estimation de canal (S850) d'un profil de retard de canal à l'aide de synchronisations de segments contenues dans le signal reçu ;
l'égalisation (s860) du signal reçu par rapport au profil de retard de canal estimé ; et
la correction (s870) d'erreurs du signal reçu selon un schéma de correction d'erreurs sans voie de retour (FEC), **caractérisé en ce que** les synchronisations de segments comprennent un nombre prédéterminé de signaux de synchronisation, la moyenne de valeurs de corrélation par rapport au nombre prédéterminé de signaux de synchronisation ayant une propriété d'autocorrélation.

16. Procédé selon la revendication 15, comprenant en outre :
l'estimation du décalage de fréquence par rapport au profil de retard de canal, qui est estimé dans l'étape d'estimation de canal ; et
l'estimation du décalage de rythme par rapport au profil de retard de canal, qui est estimé dans l'étape d'estimation de canal.

17. Procédé selon la revendication 15, dans lequel l'étape d'estimation de canal comprend :
le calcul (S851) de valeurs de corrélation entre les synchronisations de segments et un signal de référence ; et
l'estimation (S853) du profil de retard de canal en calculant une moyenne des valeurs de corrélation estimées.

18. Procédé selon la revendication 15, dans lequel les synchronisations de segments comprennent un nombre prédéterminé de signaux de synchronisation et le signal de référence est le même signal que celui de la synchronisation de segments et comprend le nombre prédéterminé des signaux de synchronisation.

19. Procédé selon la revendication 18, dans lequel le nombre prédéterminé des signaux de synchronisation comprend :
une première synchronisation ayant une séquence de type k, -k, -k, k ;
une deuxième synchronisation ayant une séquence k, k, k, k ;
une troisième synchronisation ayant une séquence k, k, -k, -k ; et
une quatrième synchronisation ayant une séquence k, -k, k, -k ;
k étant un nombre entier naturel indiquant un niveau du signal de synchronisation.

20. Procédé selon la revendication 17, dans lequel la moyenne calculée présente une propriété d'autocorrélation.
